# EUROPEAN PATENT SPECIFICATION

(11) **EP 3 768 531 B1**
(45) Date of publication and mention of the grant of the patent: **07.06.2023**
(21) Application number: 19713797.9
(22) Date of filing: 27.03.2019
(51) Int. Cl.: B60C 23/04

(54) **AUTO-CALIBRATING TYRE PRESSURE MONITORING SYSTEM**
SELBSTKALIBRIERENDES REIFENDRUCKÜBERWACHUNGSSYSTEM
SYSTÈME DE CONTRÔLE DE PRESSION DE PNEU À ÉTALONNAGE AUTOMATIQUE

(30) Priority: 27.03.2018 GB 201804862
(43) Date of publication of application: 27.01.2021
(73) Proprietor: Wheely-Safe-Ltd., Burntwood Staffordshire WS7 4QF (GB)
(72) Inventor: BROADFIELD, Gary, Staffordshire WS7 9AX (GB)
(74) Representative: Marks & Clerk LLP
(86) International application number: PCT/EP2019/057805
(87) International publication number: WO 2019/185763

(56) References cited:
- FR-A1- 2 962 939
- GB-A- 2 490 302
- US-A- 5 517 853
- US-A1- 2016 167 462

## Description

### Technical Field

The invention relates to tyre pressure monitoring systems (TPMS). In particular, the invention may relate to tyre pressure monitoring systems comprising internal pressure sensors located rearward of a tyre valve.

### Background

TPMSs typically comprise pressure sensor modules that may be fitted to a pneumatic tyre of a vehicle. In addition, a driver indicator unit is installed in the vehicle for notifying the driver of the pressures of gas retained in the pneumatic tyres (the tyre pressures).

In such systems, the sensing modules are configured to transmit an absolute value for the tyre pressure of each pneumatic tyre to the driver indicator unit. The driver indicator unit then displays the tyre pressures to the driver. The driver indicator unit may also determine whether the tyre pressures are within limits set by one or more tyre parameters and informs the driver if that is not the case. The driver indicator unit therefore requires programming in order to determine the tyre parameters. Typically, this may require a user or fitter of the system to program into the driver indicator unit a number of pressure values based on, for example, the vehicle type, the tyre type, the location of the tyre on the vehicle, the tyre high and low pressure limits, etc. This is complicated, time consuming and is prone to error. Other TPMSs may be manufactured and marketed in different versions for different pressures.

The inventor has previously developed an improved system, as described in patent application number GB1621109.6. The improved system provides sensors which are installable on a tyre valve and can detect changes in tyre pressure. The system sends alerts to a driver indicator unit rather than specific pressure data. To inflate or deflate the tyre, the sensor must first be removed. The sensors are configured to detect when they have been removed and re-installed and then automatically re-calibrate to the new tyre pressure.

Alternative known TPMSs use internal-type sensors fitted rearward of the pneumatic valve. Internal-type tyre pressure sensors are not removed and re-installed when the tyre is being inflated/deflated and can be pre-installed by car or wheel manufacturers or retrofitted by users. Since the sensors are not removed, inflation or deflation of the tyre is not preceded by any indication to the sensing module that can be used to trigger recalibration.

It is thus desirable to provide a tyre pressure monitoring system for use with internal tyre pressure sensors which is able to auto-calibrate or reset a calibrated tyre pressure after inflation or deflation of the tyre.

FR2962939A1 relates to calculating a reference pressure of a tyre of a motor vehicle by detecting an increase in pressure of the tyre. US5517853A relates to a process for using signals in a tire monitoring system to determine reinflation. US2016/167462A1 relates to a tire fill assist apparatus according to the preamble of claim 1. GB2490302A relates to a tyre pressure warning system.

### Summary of invention

According to the invention in an aspect, there is provided a tyre pressure sensor module for fitting to a wheel of a vehicle comprising a pneumatic tyre, the sensor module comprising: a pressure sensor for sensing pressure of a gas retained within the pneumatic tyre; an alert generator configured to generate one or more alert signals based on the sensed pressure of the gas and a calibrated tyre pressure; and a controller configured to receive pressure data from the pressure sensor and determine whether the tyre is being inflated or deflated by a user, and subsequently re-set the calibrated tyre pressure to the pressure of the gas after inflation or deflation.

Optionally, the pressure sensor is positioned rearward of a valve inlet of the tyre.

Optionally, the controller is configured to receive the pressure data periodically.

Optionally, the controller is configured to receive the pressure data at a first frequency in a default mode, and to receive the pressure data at a second frequency greater than the first frequency in a monitoring mode, and wherein the controller is configured to enter the monitoring mode in dependence on the pressure of the gas changing a rate higher than a threshold.

Optionally, the tyre pressure sensor module further comprises a motion sensor, wherein the controller is further configured to receive motion data from the motion sensor and to enter the monitoring mode in dependence on the motion data indicating that the sensing module is stationary.

Optionally, the controller is configured to monitor an increase in the pressure of the gas in the monitoring mode, and is further configured to re-set the calibrated pressure after the pressure of the gas has stopped increasing.

Optionally, the controller is configured to monitor a decrease in the pressure of the gas in the monitoring mode, and is further configured to re-set the calibrated pressure after the pressure of the gas has stopped decreasing.

Optionally, the controller is further configured to re-set the calibrated pressure after the pressure of the gas has stabilised for a predetermined period of time.

Optionally, if the pressure of the gas has not stabilized after a threshold time, the controller is configured to enter the default mode.

According to the invention in an aspect, there is provided a tyre pressure monitoring system comprising: a plurality of tyre pressure sensing modules according to any disclosed herein; and a driver indicator unit.

According to the invention in an aspect, there is provided a vehicle comprising the tyre pressure monitoring system.

According to the invention in an aspect, there is provided a method for re-setting a calibrated tyre pressure of a tyre pressure sensing module fitted to a wheel comprising a pneumatic tyre, the method comprising: sensing a pressure of a gas retained within the pneumatic tyre; generating one or more alert signals based on the sensed pressure of the gas and a calibrated tyre pressure; and receive pressure data from the pressure sensor and determining whether the tyre is being inflated or deflated by a user, and subsequently re-setting the calibrated tyre pressure to the pressure of the gas after inflation or deflation.

According to the invention in an aspect, there is provided a computer program comprising instructions which, when executed on at least one processor, cause the at least one processor to control the tyre pressure sensor module to carry out a method according to any disclosed herein.

### Brief Description of the Figures

Exemplary methods and apparatus are described herein with reference to the accompanying drawings, in which:
Figure 1 is a schematic diagram of a vehicle including a TPMS;
Figure 2 is a schematic diagram of a tyre pressure sensing module;
Figure 3 is a schematic diagram of a driver indicator unit; and
Figure 4 is a process flow diagram showing a method for monitoring tyre pressures of a vehicle.

### Detailed Description

Generally, disclosed herein are tyre pressure sensing modules for resetting a calibrated pressure for a tyre to which the sensing module is fitted when the sensing module is not removed prior to manual inflation and deflation and specifically when a pressure sensor is located rearward of a valve inlet for the tyre. Exemplary methods and apparatus achieve this at least in part by one of detecting when an inflation/deflation rate is greater than a threshold and/or detecting that the sensing module is stationary.

Also disclosed herein are sensing modules and driver indicator units that may form part of a TPMS. Exemplary sensing modules disclosed are configured not to transmit absolute tyre pressure values to the driver indicator unit, but to transmit alert signals notifying the driver indicator unit that a value related to the tyre pressure of a wheel is not within limits set by one or more pressure or rate thresholds. That is, in exemplary arrangements, the sensing module is configured to determine whether the value related to the tyre pressure is within the pressure or rate thresholds, rather than the driver indicator unit.

The inventor has appreciated that by moving the determination of whether to generate an alert signal from the indicator unit to the sensing module, less data is required to be transmitted and the frequency of data to be transmitted from the sensing module to the driver indicator unit is greatly reduced. The sensing module only needs to transmit an alert signal when an alarm is necessary, which can be much simpler and more data efficient than transmitting an absolute tyre pressure value which other systems typically send every five minutes continuously. This provides benefits in terms of reduced power consumption, which allows the battery of the sensing unit to be smaller for a given time or battery life, reducing the need for replacement batteries, complicated instructions and structures for battery exchange, and optionally enabling a low cost permanently sealed solution. For internal-type sensing modules where accessing the sensing module requires removal of the tyre, the extended lifetime is particularly desirable. For external-type sensing modules, this also has the added benefit of a lightweight sensing module which reduces stresses on the valve stem and prevents any possibility of affecting the wheel balance.

In addition, the inventor has appreciated that by moving the determination of alert signals to the sensing module, the burden of programming the driver indicator unit and/or user set up procedures may be removed. Exemplary sensing units are configured to self-calibrate based on data received from at least the pressure sensor and optionally from a motion sensor.

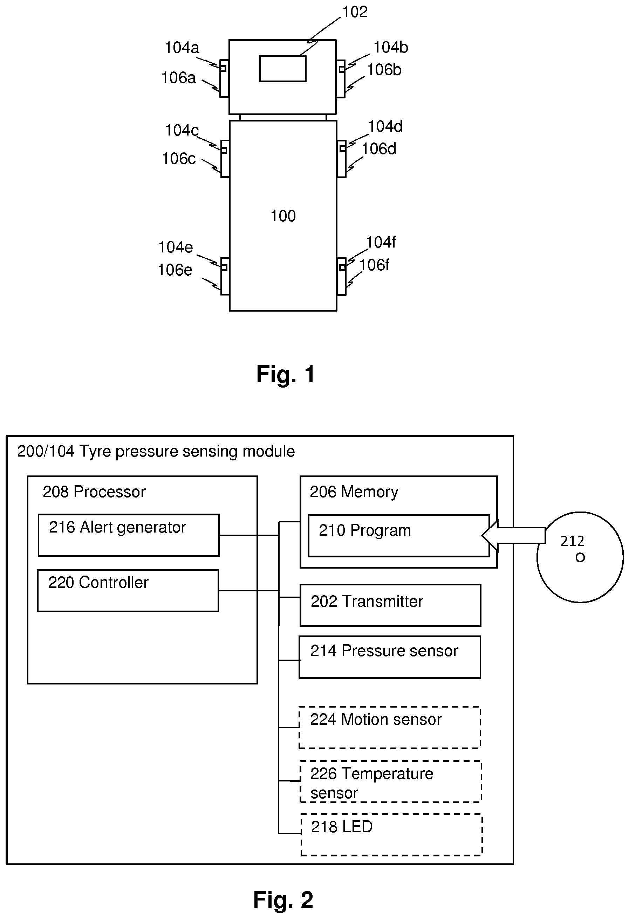

Figure 1 shows a schematic diagram of a TPMS fitted to a vehicle 100. The TPMS includes a driver indicator unit 102 and a plurality of tyre pressure sensing modules 104a-f. The driver indicator unit 102 is fitted within the vehicle and in view of the driver. Each of the sensing modules 104a-f is fitted to a wheel 106a-f of the vehicle 100 and each wheel 106a-f comprises a pneumatic tyre. The sensing modules 104a-f are configured to sense a tyre pressure of a corresponding pneumatic tyre, as explained in greater detail below. Each of the sensing modules 104a-f is also configured to determine whether an alert signal should be transmitted to the driver indicator unit 102 based on the sensed tyre pressure. The sensing module 104a-f may require a pairing procedure to register the sensing module 104a-f with the driver indicator unit 102. This pairing may be done in a number of ways.

The vehicle 100 of Figure 1 is a lorry or other goods vehicle, but it will be appreciated that the TPMS and any components thereof may be fitted to any type of vehicle, including towed vehicles, having at least one pneumatic tyre.

Figure 2 shows a schematic representation of a tyre pressure sensing module 200, which may be a sensing module 104a-f shown in Figure 1. The sensing module 200 comprises a transmitter 202. The transmitter 202 may be in data communication with other entities in a TPMS, such as driver indicator unit 102, servers and/or functions in a telecommunications network and is configured to transmit data accordingly.

The sensing module 200 further comprises a memory 206 and a processor 208. The memory 206 may comprise a non-volatile memory and/or a volatile memory. The memory 206 may have a computer program 210 stored therein. The computer program 210 may be configured to undertake the methods disclosed herein. The computer program 210 may be loaded in the memory 206 from a non-transitory computer readable medium 212, on which the computer program is stored. The processor 208 is configured to undertake one or more of the functions of an alert generator 216 and a controller 220 as set out below. In one series of embodiments, the sensing module 200 also comprises a pressure sensor 214 optionally controlled by the processor. In a further series of embodiments, the sensing module further comprises one or more of a motion sensor 224, temperature sensor 226 and LED 218 and the processor may be configured to control one or more of these features.

Each of the transmitter 202, memory 206, processor 208, pressure sensor 214, alert generator 216, controller 220, and optionally the LED 218, motion sensor 224 and temperature sensor 226 is in data communication with the other features 202, 206, 208, 210, 214, 216, 218, 220, 224, 226 of the sensing module 200. The sensing module 200 can be implemented as a combination of computer hardware and software. In particular, the alert generator 216 and controller 220 may be implemented as software configured to run on the processor 208. The memory 206 stores the various programs/executable files that are implemented by a processor 208, and also provides a storage unit for any required data. The programs/executable files stored in the memory 206, and implemented by the processor 208, can include the alert generator 216 and controller 220, but are not limited to such.

The sensing module 200 may further comprise an energy source, such as a cell or battery (not shown).

A series of different embodiments of sensing module 200, 104 are envisaged. The first is an internal-type sensing module configured for fitting (or at least for fitting of the pressure sensor 214) on the rearward/internal side of the valve, to a wheel rim for example. The sensing module 200, 104 may itself comprise the valve as a single unitary product, thus simplifying installation and negating the need for connecting the sensing module to existing and/or conventional valves.

In alternative embodiments, the sensing module 200, 104 may comprise an external type sensing module 200, 104 to be fitted to a valve of the pneumatic tyre of each wheel. The valve may be a Schrader type valve and may comprise a screw thread. Therefore, the sensing module 200, 104 may comprise a corresponding screw thread permitting the sensing module 200, 104 to be screwed onto the valve. The fitment may also comprise a valve actuator configured to interact with the valve when the sensing module 200, 104 is fitted to allow gas from within the tyre to enter the pressure sensor 214. In this way the pressure sensor 214 is able to sense the pressure of the gas within the tyre. In such variants it is expected that the sensing module 200, 104 will comprise a pass through to allow the pneumatic tyre to be inflated/deflated without requiring removal of the external-type sensing module.

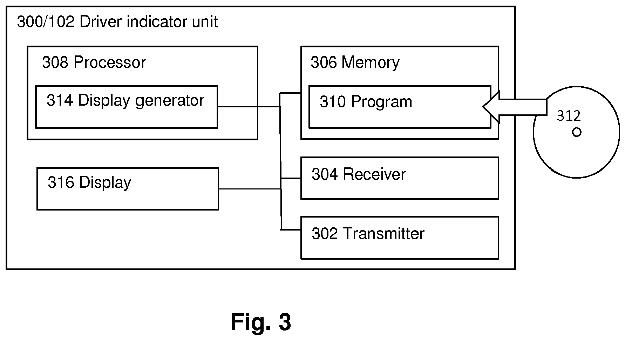

Figure 3 shows a schematic representation of a driver indicator unit 300, which may be a driver indicator unit 102 shown in Figure 1. The driver indicator unit 300 comprises a receiver 304 and may also comprise a transmitter 302. The transmitter 302 and receiver 304 may be in data communication with other entities in a TPMS, such as sensing modules 200, 104, servers and/or functions in a telecommunications network and are configured to transmit and receive data accordingly.

The driver indicator unit 300 further comprises a memory 306, a processor 308 and a display 316. The memory 306 may comprise a non-volatile memory and/or a volatile memory. The memory 306 may have a computer program 310 stored therein. The computer program 310 may be configured to undertake the methods disclosed herein. The computer program 310 may be loaded in the memory 306 from a non-transitory computer readable medium 312, on which the computer program is stored. The processor 308 is configured to undertake one or more of the functions of a display generator 314, as set out below.

Each of the transmitter 302 and receiver 304, memory 306, processor 308 display generator 314 and display 316 is in data communication with the other features 302, 304, 306, 308, 310, 314, 316 of the driver indicator unit 300. The driver indicator unit 300 can be implemented as a combination of computer hardware and software. In particular, the display generator 314 may be implemented as software configured to run on the processor 308. The memory 306 stores the various programs/executable files that are implemented by a processor 308, and also provides a storage unit for any required data. The programs/executable files stored in the memory 306, and implemented by the processor 308, can include the display generator 314, but are not limited to such.

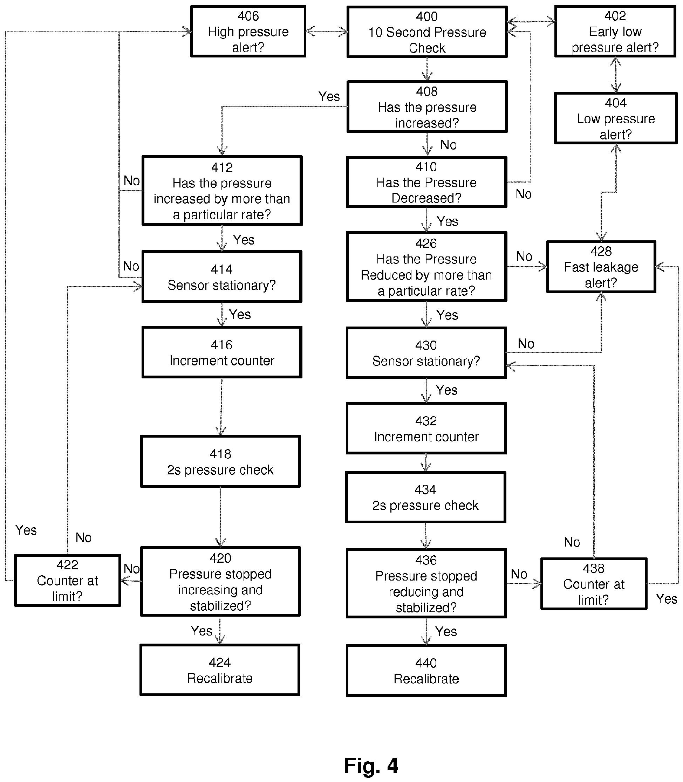

The operation of the sensing module 200, 104 will now be described with reference to the preceding figures and the algorithm in Figure 4.

Once the pressure sensor is installed and calibrated to a particular tyre pressure, the alert generator 216 determines a plurality of thresholds that may be used to determine whether an alert signal should be transmitted to the driver indicator unit 102. The alert generator 216 may be configured to determine at least one or more of the following pressure thresholds:
- **High pressure threshold:** this is a pressure that is greater than the calibrated pressure by a given percentage, for example, in a range from 10%-40% greater than the calibrated pressure. In a specific exemplary arrangement, the high pressure parameter is 35% greater than the calibrated pressure.
- **Early low pressure threshold:** this is a pressure that is less than the calibrated pressure by a given percentage, which is less than the percentage for the low pressure parameter (discussed below). For example, the early low pressure parameter may be in a range from 10% to 20% less than the calibrated pressure. In a specific exemplary arrangement, the early low pressure parameter is 15% less than the calibrated pressure.
- **Low pressure threshold:** this is a pressure that is less than the calibrated pressure by a given percentage, for example, in a range from 20%-40% less than the calibrated pressure. In a specific exemplary arrangement, the low pressure parameter is 25% less than the calibrated pressure.
- **Leakage threshold:** this is a rate of change of tyre pressure that is greater than a rate threshold. In exemplary arrangements, the rate threshold may be in a range from 2% to 4% of the calibrated pressure per minute and may specifically be 3% of the calibrated pressure per minute. In other exemplary embodiments, the rate threshold may be an absolute value, for example, if the pressure has dropped by a rate from 0.5 to 3 Psi per minute. In one exemplary embodiment, the leakage threshold is 2Psi in 90 seconds.
- **Blowout threshold:** this is a rate of change of tyre pressure that results in a deflation from calibrated pressure to substantially atmospheric pressure in a time less than a blowout threshold. For example, the blowout threshold time may be in a range from 1 second to 4 seconds and may specifically be 3 seconds.

The high/low and early low pressure thresholds may collectively be termed pressure thresholds. The leakage threshold and the blowout threshold may collectively be termed rate thresholds. Thus, in the default mode, the sensing module is configured to issue the corresponding alert above if the pressure sensor detects a tyre pressure value beyond the thresholds.

Referring to Figure 4, in a default mode, the pressure sensor 214 senses 400 the tyre pressure at intervals of e.g. every 10 seconds. The alert generator 216 compares the sensed pressure with the pressure and/or rate thresholds and determines whether an early low pressure alert signal 402, a low pressure alert signal 404 or a high pressure alert signal 406 should be generated based on the result of that comparison. It is noted that in order to assess the sensed pressure against the rate thresholds, one or more previously sensed pressures may also be used. These may be stored in the memory 206.

If the sensed pressure or rate of change of pressure is not outside one or more of the determined thresholds then no alert is generated and the tyre pressure is sensed again by the pressure sensor 214 after the next interval period. If the alert generator 216 determines that the sensed pressure or rate of change of pressure are outside one or more of the tyre thresholds then the alert generator 216 generates 410 an alert signal and the transmitter 202 transmits the alert signal to the driver indicator unit 102.

It is noted that Figure 4 does not show any detail about the operation of the various alerts 402, 404, 406, 428. There are a number of ways to implement such alerts that will be known to the skilled person. Also, after an alert is generated (or not) the system will return to the default (e.g. 10 second) pressure check 400.

The driver indicator unit 300, 102 receives the alert signal and the display generator 314 controls the display 316 to display the alert to the driver. It is noted again that in certain embodiments the driver indicator unit 300, 102 does not receive an absolute value for the tyre pressure. Further, in exemplary arrangements the driver indicator unit 300, 102 does not store any information on what the calibrated tyre pressure is (i.e. the correct pressure for the tyre) or what any of the pressure or rate thresholds are. The driver indicator unit 300, 102 merely receives an alert signal and makes a corresponding indication to the driver. This reduces considerably the power consumption of the driver indicator unit 102 as large LCD screens are not necessary and allows the use of a solar panel to provide electrical power rather than having to connect the driver indicator unit 300, 102 to an internal vehicle power source. Therefore, the driver indicator unit may comprise a solar panel on an upper surface thereof. The upper surface of the driver indicator unit 300, 102 may also comprise an adhesive or other securing means for retaining the sensing module against the windscreen of the vehicle. In exemplary methods and apparatus, the driver indicator unit 300, 102 may require 1/20^{th} the electrical power of a typical unit in known systems.

In the case of a high/low pressure alert, the alert generator 216 generates the alert if the sensed pressure is greater than or less than the calibrated pressure by more than the percentages mentioned above (e.g. 25%). The high/low pressure alert signal may be transmitted by the transmitter 202 to the driver indicator unit 300, 102 every 5 seconds for 90 seconds, or optionally, for the remainder of the journey. The pressure alert signal is transmitted immediately upon determining that the sensed pressure is high/low and is transmitted in multiple frames, ensuring that the risk of transmission loss is all but eliminated. This high rate of transmission and immediate pressure alert transmissions may be favourably compared to known TPMSs, which may transmit typically just a one or two frames of pressure value and sensor ID once every 5 minutes or so. Exemplary methods and apparatus ensure that the driver is alerted quickly and with a high confidence that the alert will be received by the driver indicator unit 300, 102.

In some embodiments, in addition to the transmitted alert signal, an LED 218 may also illuminate to indicate the sensing module 200, 104 that has generated the alert signal. In exemplary arrangements, the colour and/or pattern (e.g. flashing rate) of the LED 218 may indicate the type of alert generated by the alert generator 216 of the sensing module 200, 104.

Separately, the controller 220 determines 408 whether the pressure within the tyre has increased or decreased 410 from the calibrated pressure. If not then the controller 220 remains in the default mode and continues to measure the pressure every ten seconds (or over another period).

If the pressure has increased, the controller 220 then compares 412 the rate of increase to a minimum increase threshold. In this case the minimum increase threshold is an increase of 1 psi in 10 seconds. If the pressure has increased by less than the minimum increase threshold then the alert generator 216 determines whether a high pressure alert 406 is required. It is noted again that the determination of whether an early low pressure alert 402, a low pressure alert 404 or a high pressure alert 406 is required is not explained in detail here as would be understood by the skilled person based on the disclosure herein and/or the prior art. The controller 220 therefore remains in default mode.

By setting a minimum increase threshold, the sensing module 200, 104 is able to filter out minor fluctuations in tyre pressure which will naturally occur due to temperature and ambient pressure. If the pressure has increased by more than the minimum increase threshold then the controller 220 enters an increasing pressure monitoring mode.

In the increasing pressure monitoring mode, the controller 220 receives data from the motion sensor 224 and determines 414 whether the sensing module 200, 104 is stationary. If the sensing module 200, 104 is not stationary then the vehicle 100 may be considered to be moving and the controller 220 may therefore conclude that the tyre is not being inflated by a user. In this case, the controller 220 enters the default mode and the alert generator 216 determines whether a high pressure alert 406 should be generated. If the controller 220 determines that the sensing module 200, 104 is stationary then a monitoring counter is incremented 416 and the controller 220 monitors 418 the tyre pressure at an increased rate, in this example every 2 seconds. Therefore, at the increased rate, the controller 220 determines 420 whether the tyre pressure has stopped increasing and has stabilised. It is noted here that the tyre pressure may be considered to have stopped increasing and/or stabilised if it is still increasing or decreasing but at an insignificant rate.

If the tyre pressure has not stopped increasing then the controller 220 determines 422 whether the monitoring counter has reached a predetermined limit, for example a value in a range from 25 to 40 and in a specific example 35. This is essentially a timeout feature. If the monitoring counter has reached the limit then this indicates that the controller 220 may infer that the increase in pressure is not due to an inflation by a user, in which case the alert generator 216 determines whether a high pressure alert 406 should be generated and the sensing module 200, 104 enters the default monitoring mode again. If the monitoring counter has not reached the limit then the controller again determines 414 whether the sensing module 200, 104 is stationary based on data received from the motion sensor 224 and repeats steps 414, 416, 418 and 420.

If, based on data from the pressure sensor 214, the controller 220 determines 420 that the tyre pressure has stopped increasing and/or has stabilised, then it resets 424 the calibrated tyre pressure that the alert generator 216 uses to determine the pressure and rate thresholds to the stabilised tyre pressure. The pressure and rate thresholds may also be recalculated.

Alternatively, if at step 410 the controller 220 determines that the pressure in the tyre has decreased, the controller 220 then compares 426 the rate of decrease to a minimum decrease threshold, in this case a decrease of 1 psi in 10 seconds. If the pressure has decreased by more than the minimum decrease threshold then the controller 220 might enter the decreasing pressure monitoring mode (described below). If the pressure decrease is less than the minimum decrease threshold then the controller 220 determines whether a fast leakage alert 428 or a low pressure alert 404 should be generated and then returns to the default monitoring mode.

If the tyre pressure is decreasing by more than minimum decreasing threshold, the controller 220 receives data from the motion sensor 224 and determines 430 whether the sensing module 200, 104 is stationary. If not, the controller enters the default mode and determines, in the normal way, whether any of the alerts 402, 404, 428 are required.

If the controller 220 determines that the sensing module 200, 104 is stationary, a monitoring counter is incremented 432. The controller now receives pressure data from the pressure sensor 214 at an increased monitoring rate 434, in this case every 2 seconds.

Similar to the increasing pressure scenario, the controller 220, based on the pressure data at the monitoring rate, determines 436 whether the tyre pressure has stopped increasing and optionally that it has stabilized. If not then the counter is checked 438 to see whether it has reached its limit, say 35. If the counter has reached its limit then the controller returns to the default mode as discussed above. If not then the controller 220 repeats steps 430-436.

If the tyre pressure has stopped decreasing and optionally has stabilized then the controller 220 resets 440 the calibrated pressure of the tyre. The alert generator 216 is then able to recalculate the pressure and rate thresholds.

The sensing module 200, 104 is capable of distinguishing between when the user is adjusting tyre pressures, and when pressure fluctuations are caused by a problem such as a leak and require alerting the user. By resetting the calibrated tyre pressure itself once the manual pressure increase or decrease has ended, exemplary sensing modules 200, 104 prevent erroneous alerts being issued due to miscalibrated settings or by user error during installation. Such an arrangement is particularly beneficial for internal-type sensing modules, since the module is not removed prior to inflation or deflation.

The inventor has realised that a number of conditions are likely to apply when a user is manually adjusting the pressure within a tyre. Firstly, it is likely that the rate of change of pressure will be above the minimum decrease threshold or minimum increase threshold, e.g. 1 psi in 10 seconds. Also, the total time for increasing or decreasing the pressure is limited and in some exemplary arrangements is likely to be around 50 seconds or less when decreasing tyre pressure and around 70 seconds or less when increasing tyre pressure. Also, the vehicle is likely to be stationary. Further, once the desired pressure is reached, the increase or decrease in pressure will stop and the pressure will stabilize. In this context, stabilisation may be considered to encompass a tyre pressure that does not vary significantly for a period of time, say 10 seconds. It is noted that exemplary arrangements disclosed herein may include one or more of the above features.

In some embodiments, after a sensing module 200, 104 is manufactured, it is in a sleep mode during which the pressure sensor 214 senses the pressure to which the sensing module is exposed at predefined intervals. In exemplary arrangements, the interval may be in a range from 10 seconds to 5 minutes. While the sensing module is not fitted to a pneumatic tyre, the pressure sensor 214 will sense atmospheric pressure. The sensing module 104a-f may be configured to remain in sleep mode if the pressure sensor 214 senses atmospheric pressure.

During installation, the sensing module 200, 104 is fitted directly to the wheel rim, or the rearward side of the valve. The pressure sensor may also be located internally. That is, it may be located within the pressurised environment. The pressure sensor 214 may detect an increase in pressure of the gas retained within the tyre during inflation. During inflation, the pressure will continuously increase up to a pressure significantly greater than atmospheric pressure, for example, around 35 pounds per square inch (approximately 2.41 Bar). The controller 220 is configured to detect the continuous increase in pressure, and enter the default mode and subsequently the monitoring mode as described above. Once the pressure has stabilised, the controller is configured to perform an initial calibration operation and the sensing module 200, 104 operates normally in default mode from that time onwards.

Exemplary methods and apparatus disclosed herein are arranged to recognise the difference between manual tyre inflation, manual tyre deflation (when excess air is removed from over-inflated tyres) and slow and fast leakages. The algorithm is based on the following fundamental differences between these states as to the chart below.

| Characteristic | Tyre Leak | Manual Inflation | Manual Deflation |
|---|---|---|---|
| If Sensor is Stationary | Possible | Possible | Possible |
| if Sensor is Rotating | Possible | NOT Possible | NOT Possible |
| Maximum time for Action to complete | Continual for many minutes / hours | 60 seconds | 40 seconds |
| Rate of change of Pressure | Varies | At least +1 PSI / 10s | At least -1 PSI / 10s |
| Rate of Change of Pressure Stop at end of Action | Stop is Gradual | Sudden Stop | Sudden Stop |

It is noted that when a tyre temperature rises by typically 10 Degrees Celsius, the tyre pressure will also rise by around 1 PSI. However such rapid rises in temperature are unrealistic and hence the Manual Inflation algorithm does not need to consider tyre temperature rises as a cause for rapid inflation.

When recognising a reduction or increase in tyre pressure, the sensor enters a monitoring mode and starts to check the tyre pressure more frequently (e.g. every 2 seconds) from default mode pressure checking (e.g. every 10 seconds). This enables the sensor to be more sensitive to the inflation / deflation profile characteristics, and hence can recognise the difference between a leakage and a manual deflation. In exemplary embodiments, the monitoring mode may check the tyre pressure at the same frequency as the default mode pressure checking (e.g. every 10 seconds in the above example).

A computer program may be configured to provide any of the above described methods. The computer program may be provided on a computer readable medium. The computer program may be a computer program product. The product may comprise a non-transitory computer usable storage medium. The computer program product may have computer-readable program code embodied in the medium configured to perform the method. The computer program product may be configured to cause at least one processor to perform some or all of the method.

Various methods and apparatus are described herein with reference to block diagrams or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, the invention may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

The skilled person will be able to envisage other embodiments without departing from the scope of the appended claims.

## Claims

1. A tyre pressure sensor module (104, 200) for fitting to a wheel (106) of a vehicle (100) comprising a pneumatic tyre, the sensor module (104, 200) comprising:
a pressure sensor (214) for sensing pressure of a gas retained within the pneumatic tyre, **characterised by** the tyre pressure sensor module (104, 200) further comprising:
a motion sensor (224);
an alert generator (216) configured to generate one or more alert signals based on the sensed pressure of the gas and a calibrated tyre pressure; and
a controller (220) configured to receive pressure data from the pressure sensor (214) and motion data from the motion sensor (224) and determine whether the tyre is being inflated or deflated by a user based on the pressure data and the motion data, and subsequently re-set the calibrated tyre pressure to the pressure of the gas after inflation or deflation.

2. The tyre pressure sensor module (104, 200) according to claim 1, wherein the pressure sensor (214) is positioned rearward of a valve inlet of the tyre.

3. The tyre pressure sensor module (104, 200) according to any one of the preceding claims, wherein the controller (220) is configured to receive the pressure data periodically.

4. The tyre pressure sensor module (104, 200) according to claim 3, wherein the controller (220) is configured to receive the pressure data at a first frequency in a default mode, and to receive the pressure data at a second frequency greater than the first frequency in a monitoring mode.

5. The tyre pressure sensor module (104, 200) according to any preceding claim, wherein the controller (220) is configured to determine that the tyre is being inflated or deflated in dependence on the pressure of the gas changing at a rate higher than a threshold.

6. The tyre pressure sensor module (104, 200) according to any preceding claim, wherein the controller (220) is configured to determine that the tyre is being inflated or deflated in dependence on the motion data indicating that the sensor module (104, 200) is stationary.

7. The tyre pressure sensor module (104, 200) of claim 5 or 6 when dependent on claim 5, wherein the controller (220) is configured to monitor an increase in the pressure of the gas after the threshold is reached, and is further configured to re-set the calibrated pressure after the pressure of the gas has stabilised.

8. The tyre pressure sensor module (104, 200) of claim 5 or 6 when dependent on claim 5, wherein the controller (220) is configured to monitor a decrease in the pressure of the gas after the threshold is reached, and is further configured to re-set the calibrated pressure after the pressure of the gas has stabilised.

9. The tyre pressure sensor module (104, 200) of any preceding claim, wherein the controller (220) is further configured to re-set the calibrated pressure after the pressure of the gas has stabilised for a predetermined period of time.

10. The tyre pressure sensor module (104, 200) of any of claims 7 to 9, wherein if the pressure of the gas has not stabilised after a threshold time, the calibration pressure is not re-set.

11. The tyre pressure sensor module (104, 200) of claim 4 or any of claims 5 to 9 when directly or indirectly dependent on claim 4, wherein if the pressure of the gas has not stabilised after a threshold time, the controller (220) is configured to enter the default mode.

12. A tyre pressure monitoring system comprising:
a plurality of tyre pressure sensing modules (104a-f) according to any of claims 1 to 11; and
a driver indicator unit (102, 300).

13. A vehicle (100) comprising a tyre pressure monitoring system according to claim 12.

14. A method for re-setting a calibrated tyre pressure of a tyre pressure sensor module (104, 200) comprising a pressure sensor (214) and a motion sensor (224) and fitted to a wheel (100) comprising a pneumatic tyre, the method comprising:
sensing a pressure of a gas retained within the pneumatic tyre;
obtaining motion data from the motion sensor (224);
generating one or more alert signals based on the sensed pressure of the gas and a calibrated tyre pressure; and
receiving pressure data from the pressure sensor (214) and motion data from the motion sensor (224) and determining whether the tyre is being inflated or deflated by a user based on the pressure data and the motion data, and subsequently re-setting the calibrated tyre pressure to the pressure of the gas after inflation or deflation.

15. A computer program comprising instructions which, when executed on at least one processor, cause the at least one processor to control a tyre pressure sensor to carry out a method according to claim 14.

## Patentansprüche

1. Reifendruck-Sensormodul (104, 200) zum Anbringen an einem Rad (106) eines Fahrzeugs (100), das einen Luftreifen umfasst, wobei das Sensormodul (104, 200) Folgendes umfasst:
einen Drucksensor (214) zum Erfassen eines Drucks eines Gases, das innerhalb des Luftreifens gespeichert ist, **dadurch gekennzeichnet, dass** das Reifendruck-Sensormodul (104, 200) ferner Folgendes umfasst:
einen Bewegungssensor (224),
einen Warnungserzeuger (216), der dafür konfiguriert ist, auf Grundlage des erfassten Drucks des Gases und eines geeichten Reifendrucks ein oder mehrere Warnsignale zu erzeugen, und
eine Steuerung (220), die dafür konfiguriert ist, Druckdaten von dem Drucksensor (214) und Bewegungsdaten von dem Bewegungssensor (224) zu empfangen und auf Grundlage der Druckdaten und der Bewegungsdaten festzustellen, ob der Reifen durch einen Benutzer aufgeblasen oder abgelassen wird, und anschließend den geeichten Reifendruck auf den Druck des Gases nach dem Aufblasen oder Ablassen nachzustellen.

2. Reifendruck-Sensormodul (104, 200) nach Anspruch 1, wobei der Drucksensor (214) hinter einem Ventileinlass des Reifens angeordnet ist.

3. Reifendruck-Sensormodul (104, 200) nach einem der vorhergehenden Ansprüche, wobei die Steuerung (220) dafür konfiguriert ist, die Druckdaten periodisch zu empfangen.

4. Reifendruck-Sensormodul (104, 200) nach Anspruch 3, wobei die Steuerung (220) dafür konfiguriert ist, in einem Standardmodus die Druckdaten mit einer ersten Frequenz zu empfangen und in einem Überwachungsmodus die Druckdaten mit einer zweiten Frequenz, größer als die erste Frequenz, zu empfangen.

5. Reifendruck-Sensormodul (104, 200) nach einem der vorhergehenden Ansprüche, wobei die Steuerung (220) dafür konfiguriert ist, in Abhängigkeit davon, dass sich der Druck des Gases mit einer Geschwindigkeit, höher als ein Schwellenwert, ändert, festzustellen, dass der Reifen aufgeblasen oder abgelassen wird.

6. Reifendruck-Sensormodul (104, 200) nach einem der vorhergehenden Ansprüche, wobei die Steuerung (220) dafür konfiguriert ist, in Abhängigkeit davon, dass die Bewegungsdaten anzeigen, dass das Sensormodul (104, 200) unbeweglich ist, festzustellen, dass der Reifen aufgeblasen oder abgelassen wird.

7. Reifendruck-Sensormodul (104, 200) nach Anspruch 5 oder 6, wenn abhängig von Anspruch 5, wobei die Steuerung (220) dafür konfiguriert ist, eine Zunahme des Drucks des Gases zu überwachen, nachdem der Schwellenwert erreicht wurde, und ferner dafür konfiguriert ist, den geeichten Druck nachzustellen, nachdem sich der Druck des Gases stabilisiert hat.

8. Reifendruck-Sensormodul (104, 200) nach Anspruch 5 oder 6, wenn abhängig von Anspruch 5, wobei die Steuerung (220) dafür konfiguriert ist, eine Abnahme des Drucks des Gases zu überwachen, nachdem der Schwellenwert erreicht wurde, und ferner dafür konfiguriert ist, den geeichten Druck nachzustellen, nachdem sich der Druck des Gases stabilisiert hat.

9. Reifendruck-Sensormodul (104, 200) nach einem der vorhergehenden Ansprüche, wobei die Steuerung (220) ferner dafür konfiguriert ist, den geeichten Druck nachzustellen, nachdem sich der Druck des Gases für einen vorbestimmten Zeitraum stabilisiert hat.

10. Reifendruck-Sensormodul (104, 200) nach einem der Ansprüche 7 bis 9, wobei, falls sich der Druck des Gases nach einer Schwellenzeit nicht stabilisiert hat, der Eichdruck nicht nachgestellt wird.

11. Reifendruck-Sensormodul (104, 200) nach Anspruch 4 oder einem der Ansprüche 5 bis 9, wenn direkt oder indirekt abhängig von Anspruch 4, wobei, falls sich der Druck des Gases nach einer Schwellenzeit nicht stabilisiert hat, die Steuerung (220) dafür konfiguriert ist, in den Standardmodus einzutreten.

12. Reifendruck-Überwachungssystem, das Folgendes umfasst:
eine Vielzahl von Reifendruck-Sensormodulen (104a-f) nach einem der Ansprüche 1 bis11 und
eine Fahrer-Anzeigeeinheit (102, 300).

13. Fahrzeug (100), das ein Reifendruck-Überwachungssystem nach Anspruch 12 umfasst.

14. Verfahren zum Nachstellen eines geeichten Reifendrucks eines Reifendruck-Sensormoduls (104, 200), das einen Drucksensor (214) und einen Bewegungssensor (224) umfasst und an einem Rad (100) angebracht ist, das einen Luftreifen umfasst, wobei das Verfahren Folgendes umfasst:
Erfassen eines Drucks eines Gases, das innerhalb des Luftreifens gespeichert ist,
Erlangen von Bewegungsdaten von dem Bewegungssensor (224),
Erzeugen eines oder mehrerer Warnsignale auf Grundlage des erfassten Drucks des Gases und eines geeichten Reifendrucks und
Empfangen von Druckdaten von dem Drucksensor (214) und Bewegungsdaten von dem Bewegungssensor (224) und auf Grundlage der Druckdaten und der Bewegungsdaten Feststellen, ob der Reifen durch einen Benutzer aufgeblasen oder abgelassen wird, und anschließend Nachstellen des geeichten Reifendrucks auf den Druck des Gases nach dem Aufblasen oder Ablassen.

15. Computerprogramm, das Anweisungen umfasst, die, wenn sie auf mindestens einem Prozessor ausgeführt werden, bewirken, dass der mindestens eine Prozessor einen Reifendrucksensor steuert, um ein Verfahren nach Anspruch 14 durchzuführen.

## Revendications

1. Module de capteur de pression de pneu (104, 200) destiné à être monté sur une roue (106) d'un véhicule (100) comprenant un bandage pneumatique, le module de capteur (104, 200) comprenant :
un capteur de pression (214) pour détecter une pression d'un gaz retenu à l'intérieur du bandage pneumatique, **caractérisé en ce que** le module de capteur de pression du pneu (104, 200) comprend en outre :
un capteur de mouvement (224) ;
un générateur d'alerte (216) configuré pour générer un ou plusieurs signaux d'alerte sur la base de la pression détectée du gaz et d'une pression calibrée du pneu ; et
un moyen de commande (220) configuré pour recevoir des données de pression du capteur de pression (214) et des données de mouvement du capteur de mouvement (224) et pour déterminer si le bandage pneumatique est gonflé ou dégonflé par un utilisateur sur la base des données de pression et des données de mouvement et pour réinitialiser ensuite la pression calibrée du pneu à la pression du gaz après le gonflage ou le dégonflage.

2. Module de capteur de pression de pneu (104, 200) selon la revendication 1, dans lequel le capteur de pression (214) est positionné à l'arrière d'une entrée de valve du pneu.

3. Module de capteur de pression de pneu (104, 200) selon l'une quelconque des revendications précédentes, dans lequel le moyen de commande (220) est configuré pour recevoir périodiquement les données de pression.

4. Module de capteur de pression de pneu (104, 200) selon la revendication 3, dans lequel le moyen de commande (220) est configuré pour recevoir les données de pression à une première fréquence dans un mode par défaut, et pour recevoir les données de pression à une deuxième fréquence supérieure à la première fréquence dans un mode de surveillance.

5. Module de capteur de pression de pneu (104, 200) selon l'une quelconque des revendications précédentes, dans lequel le moyen de commande (220) est configuré pour déterminer que le pneu est gonflé ou dégonflé en fonction d'un changement de la pression du gaz à une vitesse supérieure à un seuil.

6. Module de capteur de pression de pneu (104, 200) selon l'une quelconque des revendications précédentes, dans lequel le moyen de commande (220) est configuré pour déterminer si le pneu est gonflé ou dégonflé en fonction des données de mouvement indiquant que le module de capteur (104, 200) est stationnaire.

7. Module de capteur de pression de pneu (104, 200) selon la revendication 5 ou 6, lorsque dépendant de la revendication 5, dans lequel le moyen de commande (220) est configuré pour surveiller une augmentation de la pression du gaz après l'atteinte du seuil, et est en outre configuré pour réinitialiser la pression calibrée après la stabilisation de la pression du gaz.

8. Module de capteur de pression de pneu (104, 200) selon la revendication 5 ou 6, lorsque dépendant de la revendication 5, dans lequel le moyen de commande (220) est configuré pour surveiller une diminution de la pression du gaz après l'atteinte du seuil, et est en outre configuré pour réinitialiser la pression calibrée après la stabilisation de la pression du gaz.

9. Module de capteur de pression de pneu (104, 200) selon l'une quelconque des revendications précédentes, dans lequel le moyen de commande (220) est en outre configuré pour réinitialiser la pression calibrée après la stabilisation de la pression du gaz pendant une période de temps prédéterminée.

10. Module de capteur de pression de pneu (104, 200) selon l'une quelconque des revendications 7 à 9, dans lequel, si la pression du gaz n'a pas été stabilisée après un temps de seuil, la pression calibrée n'est pas réinitialisée.

11. Module de capteur de pression de pneu (104, 200) selon la revendication 4 ou selon l'une quelconque des revendications 5 à 9, lorsque dépendant directement ou indirectement de la revendication 4, dans lequel, si la pression de gaz n'a pas été stabilisée après un temps de seuil, le moyen de commande (220) est configuré pour entrer dans le mode par défaut.

12. Système de surveillance de la pression de pneu, comprenant :
une pluralité de modules de détection de la pression des pneus (104a-f) selon l'une quelconque des revendications 1 à 11 ; et
une unité indicatrice pour le conducteur (102, 300).

13. Véhicule (100), comprenant un système de surveillance de la pression des pneus selon la revendication 12.

14. Procédé de réinitialisation d'une pression calibrée des pneus d'un module de capteur de pression de pneu (104, 200) comprenant un capteur de pression (214) et un capteur de mouvement (224) et fixé sur une roue (100) comprenant un bandage pneumatique, le procédé comprenant les étapes suivantes :
détection d'une pression d'un gaz retenu à l'intérieur du bandage pneumatique ;
obtention de données de mouvement du capteur de mouvement (224) ;
génération d'un ou de plusieurs signaux d'alerte sur la base de la pression détectée du gaz et d'une pression calibrée du pneu ; et
réception de données de pression du capteur de pression (214) et de données de mouvement du capteur de mouvement (224) et détermination du fait que le pneu est gonflé ou dégonflé par un utilisateur sur la base des données de pression et des données de mouvement ou non, et par la suite réinitialisation de la pression calibrée du pneu à la pression du gaz après le gonflage ou le dégonflage.

15. Programme informatique comprenant des instructions, qui, lors de leur exécution sur au moins un processeur, amènent l'au moins un processeur à contrôler un capteur de pression de pneu à exécuter un procédé selon la revendication 14.
